# EUROPÄISCHE PATENTANMELDUNG

(11) **EP 2 979 600 A2**
(43) Veröffentlichungstag der Anmeldung: **03.02.2016**
(21) Anmeldenummer: 15178101.0
(22) Anmeldetag: 23.07.2015
(51) Int. Cl.: A47L 9/00, B08B 15/00, B23Q 11/00, F24F 7/06, F24F 13/14, F16K 7/10, F16K 7/07

(54) **ABSAUGSTUTZEN UND ABSAUGVORRICHTUNG**

(30) Priorität: 28.07.2014 DE 102014010919
(71) Anmelder: Schuko H. Schulte-Südhoff GmbH, 49196 Bad Laer (DE)
(72) Erfinder: Schulte-Südhoff, Heiko, 49214 Bad Rothenfelde (DE)
(74) Vertreter: Otten, Roth, Dobler & Partner mbB Patentanwälte

(57) **Zusammenfassung**

Vorgeschlagen wird ein Absaugstutzen (1) für Absaugvorrichtungen (4) zum Absaugen von Luft aus dem Bearbeitungsraum (B) einer Bearbeitungsmaschine, wobei der Absaugstutzen eine Öffnung bildet, um durch die Öffnung (2) mit Partikeln aus dem Bearbeitungsraum angereicherte Luft absaugen zu können. Zur besseren Feinjustierung ist eine Membran (3) zum Einstellen der Größe der Öffnung vorgesehen, wobei die Membran eine Kammer ausbildet, die mit einem Fluid befüllbar ist, und wobei die Membran so in Bezug zur Öffnung angeordnet ist, dass durch Befüllen bzw. Entleeren der Kammer die Größe der Öffnung einstellbar ist.

## Beschreibung

Die Erfindung betrifft einen Absaugstutzen für Absaugvorrichtungen zum Absaugen von Luft aus dem Bearbeitungsraum einer Bearbeitungsmaschine, insbesondere für die Bearbeitung von Holz, Kunststoff bzw. Verbundwerkstoffen nach dem Oberbegriff des Anspruchs 1, eine Absaugvorrichtung nach dem Oberbegriff des Anspruchs 9 sowie ein Kontrollverfahren zum Kontrollieren eines Absaugverfahrens und/oder einer Absaugvorrichtung nach dem Oberbegriff des Anspruchs 14.

Aus dem Stand der Technik ist bekannt, bei derartigen Absaugvorrichtungen die Absaugleistung über eine Justierung der gesamten Absauganlage zu regeln.

Aufgabe der Erfindung ist es, eine Absaugvorrichtung mit einer verbesserten Feinregelung vorschlagen zu können.

Die Aufgabe wird, ausgehend von einem Absaugstutzen, einer Absaugvorrichtung und einem Kontrollverfahren der eingangs genannten Art, durch die kennzeichnenden Merkmale der Ansprüche 1, 9 und 14 gelöst.

Durch die in den Unteransprüchen genannten Maßnahmen sind vorteilhafte Ausführungen und Weiterbildungen der Erfindung möglich.

Dementsprechend zeichnet sich der erfindungsgemäße Absaugstutzen bzw. die erfindungsgemäße Absaugvorrichtung dadurch aus, dass der Absaugstutzen eine Membran zum Einstellen der Größe der Öffnung umfasst. Die Feinjustierung kann daher unmittelbar an der Bearbeitungsmaschine erfolgen und muss nicht über eine Justierung der gesamten Absauganlage bzw. der Drehzahl der Ventilationsvorrichtung, die zum Absaugen verwendet wird, erfolgen. In vorteilhafter Weise kann dadurch die Absaugleistung besser an die tatsächlich benötigte Absaugleistung angepasst werden, was regelmäßig zur Reduzierung der Betriebskosten führt (z. B. durch Stromeinsparung, wenn im Durchschnitt weniger Leistung benötigt wird).

Abgesaugt werden insbesondere Partikel wie Späne, Stäube oder dergleichen, die beim Bearbeiten eines Werkstücks aus Holz, Kunststoff oder Verbundwerkstoff, gegebenenfalls aus Metall im Bearbeitungsbereich einer Bearbeitungsmaschine (wie z.B. einer Werkzeugmaschine) regelmäßig anfallen.

Eine Anordnung am Rand des Stutzens bei einer Ausführungsform der Erfindung ermöglicht, dass sich weniger Verschmutzungen dort mit der Zeit ansammeln können.

Die Membran kann zum Beispiel durch Vulkanisierung an dem restlichen Absaugstutzen aufgebracht werden.

Die Membran ist bei einem Ausführungsbeispiel der Erfindung wie ein Ballon oder ein Reifen aufblasbar. Je mehr Luft in die Kammer gepumpt wird, umso mehr dehnt sich die Membran aus und kann die Öffnung des Absaugstutzens mehr und mehr blockieren. Die Membran kann entsprechend wenigstens teilweise elastisch ausgebildet sein, damit auch beim Entleeren der Druckluft aus der Membran diese im Wesentlichen in ihren Zustand vor dem Aufblasen zurückkehrt, sich also entspannt und die Öffnung weniger blockiert. Anstelle von Druckluft kann im Allgemeinen auch ein anderes gasförmiges Medium, gegebenenfalls auch eine Flüssigkeit oder ein anderes Fluid verwendet werden.

Bei einer Weiterbildung erfasst die Kontrollvorrichtung sensorisch zum einen, welcher Luftmengenstrom, also wie viel Luftvolumen pro Zeiteinheit, strömt oder welche Geschwindigkeit bei der abgesaugten Luftmenge vorherrscht oder wie der Aufblaszustand der Membran bzw. der Kammer ist. Kontrolle bedeutet im Sinne der Erfindung Steuerung und/oder Regelung.

### Ausführungsbeispiel:

Ein Ausführungsbeispiel ist in der Zeichnung dargestellt und wird nachstehend unter Angabe weiterer Einzelheiten und Vorteile näher erläutert. Im Einzelnen zeigen:
- **Figur 1**: **eine Absaugvorrichtung (schematisch) gemäß der Erfindung, sowie**
- **Figur 2**: **eine weitere Absaugvorrichtung (schematisch) gemäß der Erfindung mit zusätzlichen Schiebern, die mittels eines Bus gesteuert wird.**

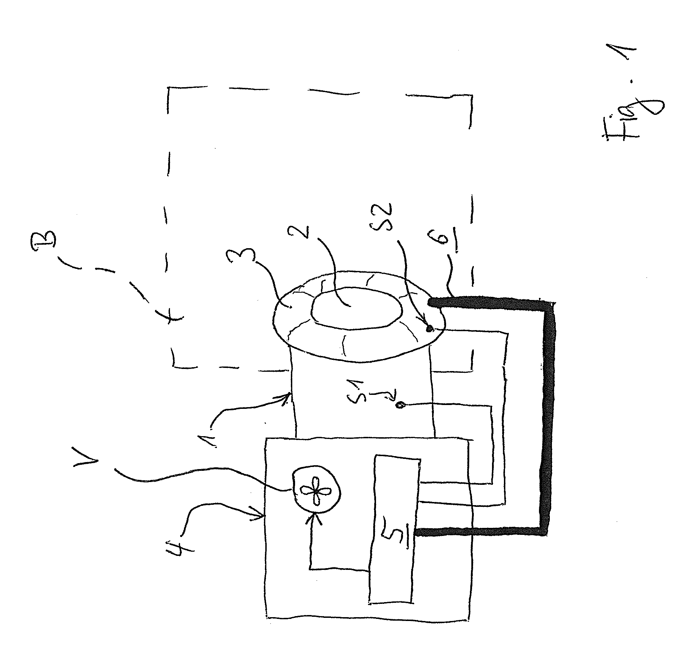

Fig. 1 zeigt einen Absaugstutzen 1 mit einem Rohr, das eine Öffnung 2 bildet, wobei am Randbereich des zylindrischen Rohrs eine Membran 3 vorhanden ist, welche die Fläche der Öffnung 2 eingrenzt. Die Membran 3 umschließt eine Kammer, in die Druckluft zum Spannen der Membran 3 eingeblasen bzw. zum Entspannen ausgelassen werden kann. Die Öffnung 2 wird beim Spannen der Membran verkleinert und beim Entspannen vergrößert. Dadurch wird der abgesaugte Luftmengenstrom bzw. die Geschwindigkeit der abgesaugten Luftmenge geregelt.

Das Kontrollverfahren der gesamten Absaugvorrichtung 4 läuft dabei wie folgt ab:
- Die Absaugvorrichtung 4 umfasst wenigstens zwei Ventilationsvorrichtungen. Eine davon wird hochgefahren auf volle Drehzahlleistung. Daraufhin diese erste Ventilationsvorrichtung entlastet, indem eine zweite hochgefahren und die erste wieder heruntergeregelt wird, sodass beide nun bei gleicher Drehzahl laufen. Diese Regelung erfolgt mit einem Frequenzumformer, insbesondere in Kaskadenschaltung. (In Figur 1 ist schematisch nur eine Ventilationsvorrichtung V für den Absaugstutzen 1 eingezeichnet. Denkbar ist aber auch, dass für einen Absaugstutzen mehrere Ventilationsvorrichtungen verwendet werden oder dass mehrere Absaugstutzen mit jeweils ihrer bzw. ihren Ventilationsvorrichtungen zum Einsatz kommen.)
- Wird tatsächlich / effektiv eine geringere Absaugleistung benötigt, so wird zunächst direkt am Bearbeitungsbereich die Membran 3 aufgepumpt und die Öffnung 2 verkleinert oder umgekehrt, d.h. bei höher Absaugleistung wird, die Öffnung 2 durch Entspannen der Membran 3 vergrößert. Die Druckluftzufuhr erfolgt über die Leitung 6 und wird insbesondere von der Kontrollvorrichtung 5 gesteuert.
- Die Kontrollvorrichtung 5 detektiert die Reduzierung des Luftmengenstroms über den Sensor S1 und/oder, falls diese überhaupt auftritt, eine Änderung der Geschwindigkeit der abgesaugten Luft und/oder die Kontrollvorrichtung 5 detektiert über den Sensor S2, wie stark die Membran 3 aufgeblasen ist bzw. wie groß die Öffnung 2 ist.
- Mit Hilfe des Frequenzumformers wird sodann die Absaugleistung bzw. die Drehzahl der Ventilationsvorrichtungen V entsprechend angepasst.
- Die Membran 3 wird wieder in den Ausgangszustand übergeführt, also z.B. entspannt und die Öffnung 2 sodann wieder vergrößert.

Grundsätzlich ist auch die Verwendung eines Absperrschiebers, der die Öffnung verkleinert bzw. wieder öffnet, anstelle einer Membran denkbar. Allerdings ist dabei voraussichtlich das Risiko der Ansammlung von mit der Luft abgesaugten Partikeln höher, was eher zu Verschmutzungen führen kann.

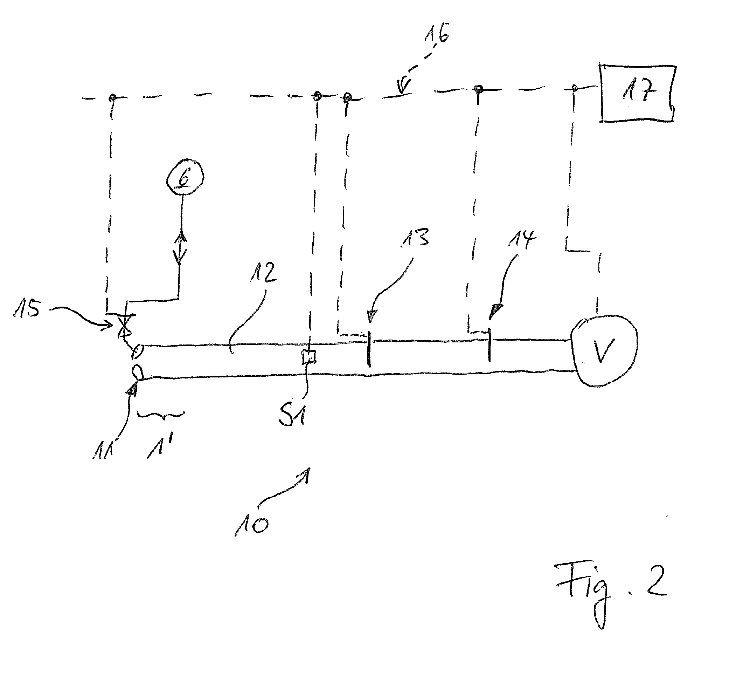

Dementsprechend zeigt Figur 2 eine Absaugvorrichtung 10 mit einer Membran 11. In Figur 2 befindet sich somit im Bereich der Membran 11 der Absaugstutzen 1', in den die Leitung 12 mündet. In der Leitung 12 sind weitere Schieber 13, 14 angeordnet. Die Membran 11 wird über eine Druckluftzufuhr 6 über das Ventil 15 gespeist. Das heißt entsprechend der anzupassenden Luftmenge bzw. Luftgeschwindigkeit in der Leitung 12 wird über das Ventil 15 Druckluft in die oder aus der Membran 11 gepumpt, sodass die von der Membran 11 umschlossene Öffnung vergrößert oder verkleinert wird und dadurch die Luftmenge bzw. die Luftgeschwindigkeit angepasst werden kann. Bei dem Ventil 15 kann es sich um ein einfaches Druckluftventil handeln. Denkbar ist grundsätzlich auch der Einsatz von Unterdruckventilen. In der Leitung 12 befindet sich des Weiteren ein Sensor S1 zur Messung des Luftmengenstroms und/oder zur Messung der Luftgeschwindigkeit. Die Kontrolle der Absaugvorrichtung 10, das heißt deren Steuerung und/oder Regelung wird über einen Bus 16 mit einer Master-Regelung 17 durchgeführt. An dem Bus ist deshalb auch die allgemeine Ventilationsvorrichtung V, wie in Figur 2 dargestellt, angeschlossen, sodass auch diese über den Bus geregelt wird.

Es können verschiedene Bus-Systeme eingesetzt, zum Beispiel ein CAN-Bus. Der Bus ist über die Leitungen 16 mit dem Sensor S1, zudem aber auch mit den Schiebern 13, 14 und mit dem Ventil 15 verbunden, sodass die Schieberpositionen der Schieber 13, 14 und die Membranbefüllung der Membran 11 entsprechend kontrolliert werden können. Bei einem Bussystem handelt es sich um eine besonders vorteilhafte Maßnahme, um das System mit mehreren Parametern, die beispielsweise über die Membran oder die Schieber 13, 14 eingestellt werden können, kontrollieren zu können. An einen Bus kann gleichzeitig auch ein Sensor (hier: S1), der die entsprechenden Kenndaten zur Kontrolle des Systems liefert, mit angeschlossen sein. Die Verwendung von Schiebern zusätzlich zur Membran kann eine Entlastung der Membran, gegebenenfalls auch ein Schutz der Membran darstellen, weil nicht die gesamte Einstellung des Luftstroms bzgl. Durchflussmenge und Geschwindigkeit über die Membran geregelt werden muss. Je nachdem, ob die Gefahr besteht, dass schwere oder schnelle Partikel zunächst die Membran beschädigen können, können auch die Schieber 13, 14 dazu verwendet werden, den Luftstrom besser einregeln zu können. Auch dann, wenn eine Absaugvorrichtung mit mehreren Leitungen vorgesehen ist, die zum Beispiel parallel absaugen und dann zusammengefüllt werden, können entsprechende Schieber eingesetzt werden, um Weichenstellungen zu bilden oder um die Luftströme in einzelnen Teilleitungen einregeln und kontrollieren zu können. Die Membran kann also durch die Verwendung von Schiebern unterstützt und geschützt werden.

Generell ist es also möglich, bei Ausführungsbeispielen der Erfindung zusätzlich zur Membran einen oder mehrere Schieber vorzusehen.

Auch der Einsatz einer Bus-Vorrichtung im Zusammenhang mit der beschriebenen Absaugvorrichtung ist beispielsweise nicht an die Verwendung von Schiebern gebunden. Es ist auch denkbar, bei einem Ausführungsbeispiel, das keine Schieber verwendet, ein Bus-System einzusetzen, mit dem beispielsweise die Ventile einer Membran und/oder die Sensoren angekoppelt werden.

### Bezugszeichenliste:

- 1: Absaugstutzen
- **1'**: **Absaugstutzen**
- 2: Öffnung
- 3: Membran
- 4: Absaugvorrichtung
- 5: Kontrollvorrichtung
- 6: Druckluftzufuhr
- **10**: **Absaugvorrichtung**
- **11**: **Membran**
- **12**: **Leitung**
- **13**: **Schieber**
- **14**: **Schieber**
- **15**: **Ventil**
- **16**: **Busleitungen**
- **17**: **Master-Kontrollvorrichtung**

- B: Bearbeitungsraum
- S1: Sensor zur Messung des Luftmengenstroms
- S2: Sensor zur Messung der Kammerbefüllung
- V: Ventilationsvorrichtung

## Patentansprüche

1. Absaugstutzen (1, 1') für Absaugvorrichtungen (4, 10) zum Absaugen von Luft aus dem Bearbeitungsraum (B) einer Bearbeitungsmaschine, insbesondere für die Bearbeitung von Holz, Kunststoff bzw. Verbundwerkstoffen, wobei der Absaugstutzen eine Öffnung bildet, um durch die Öffnung (2) mit Partikeln aus dem Bearbeitungsraum angereicherte Luft absaugen zu können, **dadurch gekennzeichnet, dass** eine Membran (3, 11) zum Einstellen der Größe der Öffnung vorgesehen ist, wobei die Membran eine Kammer ausbildet, die mit einem Fluid, insbesondere einem gasförmigen Medium, vorzugsweise mit Druckluft, befüllbar ist, und wobei die Membran so in Bezug zur Öffnung angeordnet ist, dass durch Befüllen und/oder Entleeren der Kammer die Größe der Öffnung einstellbar ist, wobei insbesondere durch Befüllen der Kammer die Öffnung verkleinerbar ist.

2. Absaugstutzen nach einem der vorgenannten Ansprüche, **dadurch gekennzeichnet, dass** die Membran (3, 11) so angeordnet ist, dass sie die Öffnung (2) des Absaugstutzens am Rand der Öffnung umgibt.

3. Absaugstutzen nach einem der vorgenannten Ansprüche, **dadurch gekennzeichnet, dass** die Membran (3, 11) die Kammer wenigstens teilweise, insbesondere vollständig umschließt.

4. Absaugstutzen nach einem der vorgenannten Ansprüche, **dadurch gekennzeichnet, dass** der Absaugstutzen (1, 1') ein Rohr zur Leitung der abgesaugten bzw. abzusaugenden Luft aufweist und das Rohr die Kammer wenigstens teilweise begrenzt.

5. Absaugstutzen nach einem der vorgenannten Ansprüche, **dadurch gekennzeichnet, dass** ein Rohr zu Leitung der abzusaugenden bzw. abgesaugten Luft vorgesehen ist und das Rohr die Kammer wenigstens teilweise begrenzt.

6. Absaugstutzen nach einem der vorgenannten Ansprüche, **dadurch gekennzeichnet, dass** die Membran (3) dazu ausgebildet ist, den abgesaugten Luftmengenstrom und/oder die Luftgeschwindigkeit der abgesaugten Luftmenge einstellen zu können, um insbesondere die Absaugleistung an die tatsächlich benötigte Absaugleistung einstellen zu können.

7. Absaugstutzen nach einem der vorgenannten Ansprüche, **dadurch gekennzeichnet, dass** die Membran (3, 11) wenigstens teilweise aus einem elastischen Material ausgebildet ist, welches sich beim Befüllen der Kammer ausdehnt und beim Entleeren der Kammer wieder entspannt und zusammenzieht.

8. Absaugstutzen nach einem der vorgenannten Ansprüche, **dadurch gekennzeichnet, dass** eine Fluidzufuhreinrichtung, vorzugsweise eine Druckluftzufuhreinrichtung (6), insbesondere ein Ein- und/oder Auslassventil zum Befüllen bzw. Entleeren der Kammer vorgesehen ist.

9. Absaugvorrichtung (4, 10) zum Absaugen von Luft aus dem Bearbeitungsraum einer Bearbeitungsmaschine, insbesondere für die Bearbeitung von Holz, Kunststoff bzw. Verbundwerkstoffen, mit einem Absaugstutzen mit einer Öffnung (2), um die abzusaugende Luft über die Öffnung des Absaugstutzens einsaugen zu können, **dadurch gekennzeichnet, dass** der Absaugstutzen (1, 1') nach einem der vorgenannten Ansprüche ausgebildet ist.

10. Absaugvorrichtung nach einem der vorgenannten Ansprüche, **dadurch gekennzeichnet, dass** eine Kontrollvorrichtung (5) zur Kontrolle, insbesondere zur Steuerung und/oder Regelung, des Absaugvorgangs der Absaugvorrichtung vorgesehen ist, die dazu ausgebildet ist, die Kammer zu befüllen und/oder zu entleeren.

11. Absaugvorrichtung nach einem der vorgenannten Ansprüche, **dadurch gekennzeichnet, dass** die Absaugvorrichtung wenigstens zwei Ventilationsvorrichtungen (V) zum Absaugen der Luft aus dem Bearbeitungsraum umfasst und die Kontrollvorrichtung einen Frequenzumformer umfasst, um die wenigstens zwei Ventilationsvorrichtungen durch den Frequenzumformer zu kontrollieren, indem zunächst eine erste der Ventilationsvorrichtungen auf eine bestimmte Drehzahl gebracht wird und anschließend die Drehzahl der ersten Ventilationsvorrichtung heruntergeregelt wird, wobei die Drehzahl einer zweiten der Ventilationsvorrichtungen auf eine bestimmte Drehzahl hochgeregelt wird.

12. Absaugvorrichtung nach einem der vorgenannten Ansprüche, **dadurch gekennzeichnet, dass** die Kontrollvorrichtung (5, 16, 17) eine Sensorvorrichtung (S1) umfasst, um den abgesaugten Luftmengenstrom und/oder die Geschwindigkeit der Luftmenge zu erfassen und anhand dessen die Ventilationsvorrichtungen (V) und/oder die Absaugleistung zu kontrollieren.

13. Absaugvorrichtung nach einem der vorgenannten Ansprüche, **dadurch gekennzeichnet, dass** die Kontrollvorrichtung eine Sensorvorrichtung (S2) umfasst, um die Größe der Öffnung zu erfassen, insbesondere den Druck in der Kammer und/oder die Menge der in die Kammer gepumpten Luft zu messen und anhand dessen die Ventilationsvorrichtungen (V) und/oder die Absaugleistung zu kontrollieren.

14. Kontrollverfahren zum Kontrollieren eines Absaugverfahrens zum Absaugen von Luft aus dem Bearbeitungsraum (B) einer Bearbeitungsmaschine, insbesondere für die Bearbeitung von Holz, Kunststoff bzw. Verbundwerkstoffen, umfassend das Absaugen von Luft aus dem Bearbeitungsraum über die Öffnung (2) eines Absaugstutzens (1, 1'), **dadurch gekennzeichnet, dass** als Absaugstutzen ein Absaugstutzen (1, 1') nach einem der vorgenannten Ansprüche verwendet wird.

15. Kontrollverfahren nach einem der vorgenannten Ansprüche, **dadurch gekennzeichnet, dass** die Größe der Öffnung durch die Membran (3, 11) eingestellt wird, um den abgesaugten Luftmengenstrom und/oder die Geschwindigkeit der abgesaugten Luftmenge einstellen zu können, indem insbesondere die Kammer der Membran befüllt und/oder entleert wird.

16. Kontrollverfahren nach einem der vorgenannten Ansprüche, **dadurch gekennzeichnet, dass** sensorisch der Befüllungszustand der Kammer und/oder der abgesaugte Luftmengenstrom und/oder die Geschwindigkeit der abgesaugten Luft erfasst wird und anhand dessen die Absaugleistung, insbesondere eine Ventilationsvorrichtung (V) zum Absaugen der Luft aus dem Bearbeitungsraum, insbesondere die Drehzahl der Ventilationsvorrichtung, kontrolliert wird.
